(19)

**Europäisches Patentamt**
**European Patent Office**
**Office européen des brevets**

(11) **EP 4 530 580 A1**

(12) **DEMANDE DE BREVET EUROPEEN**

(43) Date de publication:
**02.04.2025 Bulletin 2025/14**

(21) Numéro de dépôt: **24202773.8**

(22) Date de dépôt: **26.09.2024**

(51) Classification Internationale des Brevets (IPC):
*G01D 5/14* (2006.01)   *G01D 5/245* (2006.01)
*G01D 7/00* (2006.01)   *G05G 1/10* (2006.01)
*G05G 5/03* (2008.04)   *G05G 5/06* (2006.01)
*G06F 3/01* (2006.01)   *G06F 3/0362* (2013.01)
*H01H 19/11* (2006.01)   *H01H 3/50* (2006.01)

(52) Classification Coopérative des Brevets (CPC):
**G01D 5/2451; G01D 5/145; G05G 5/03;**
**G06F 3/016; G06F 3/0362;** G01D 7/007;
G01D 2205/90; G05G 1/10; G05G 5/06;
H01H 19/11; H01H 2003/506

(84) Etats contractants désignés:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Etats d'extension désignés:
**BA**
Etats de validation désignés:
**GE KH MA MD TN**

(30) Priorité: **26.09.2023 FR 2310218**

(71) Demandeur: **THALES**
**92190 Meudon (FR)**

(72) Inventeurs:
• **BESNARD, Mathieu**
**33700 MERIGNAC (FR)**
• **DUPHIL, Noémie**
**33700 MERIGNAC (FR)**

(74) Mandataire: **Lavoix**
**2, place d'Estienne d'Orves**
**75441 Paris Cedex 09 (FR)**

(54) **CODEUR MAGNÉTIQUE INCRÉMENTAL**

(57) La présente invention concerne un codeur magnétique incrémental (10) définissant un axe de codeur (X) et comprenant un corps fixe et un corps mobile.

L'un des corps, dit premier corps (21), comprend un premier support (33) comprenant N éléments magnétiques disposés.

L'autre corps, dit deuxième corps (22), comprend :
- un deuxième support (41) comprenant K*M éléments magnétiques disposés de manière inhomogène le long de la direction de codage (C1, C2) en regard des N éléments magnétiques, les K*M éléments magnétiques formant M groupes de K éléments magnétiques, des éléments initiaux des M groupes différents étant espacés entre eux le long de la direction de codage (C1, C2) selon un pas homogène P1, les K-1 éléments magnétiques de chaque groupe étant espacés de l'élément magnétique initial de ce groupe selon des pas variables Pi ;
- au moins un détecteur magnétique disposé en regard du premier support (33).

FIG.2

**Description**

DOMAINE DE L'INVENTION

La présente invention concerne un codeur magnétique incrémental.

Plus particulièrement, la présente invention concerne un codeur apte à fournir des signaux logiques binaires représentant des incréments de position relative de deux éléments du codeur, les deux éléments étant mobiles l'un par rapport à l'autre. Avantageusement, un tel codeur est applicable dans le domaine aéronautique, par exemple dans un cockpit de pilotage d'un aéronef.

Typiquement, dans une application pour des équipements aéronautiques, on peut utiliser un codeur angulaire et/ou linéaire pour indiquer à un calculateur de pilotage automatique une consigne d'altitude ou de vitesse que l'opérateur choisit en actionnant un bouton de commande du codeur. La fiabilité du codeur et des informations qu'il délivre est alors un élément essentiel du codeur. Le besoin typique pour un codeur aéronautique peut comprendre un ou plusieurs des éléments suivants : compacité, capacité d'effectuer des multi-tours en rotation et/ou une course linéaire, capacité d'incrémentation et de crantage, etc. Afin de permettre sa certification, le codeur aéronautique doit également pouvoir répondre à des niveaux de sécurité DAL (de l'anglais « *Design Assurance Level* ») élevés, notamment au niveau DAL A.

En particulier, en ce qui concerne la compacité, un codeur présente typiquement un bouton de commande de diamètre entre 10 à 100 mm et de longueur entre 5 et 50 mm (typiquement QJ 16 mm x lg 16 mm) et un corps de diamètre entre 10 à 100 mm et de longueur entre 5 et 100 mm (typiquement Ø 25 mm x lg 50 mm) caché derrière le panneau de fixation ou fixé devant ce panneau. Dans ce dernier cas, le bouton englobe le corps du codeur qui est fixé sur le panneau et permet d'être placé autour, voire légèrement en chevauchement d'un moniteur ou écran.

En ce que concerne la capacité d'incrémentation, chaque passage de cran (ou pas) constitue un incrément d'une unité de comptage de la rotation ou de la translation. La résolution angulaire ou linéaire est définie pas le pas (ou cran). Le nombre de pas par tour est de l'ordre de 1 à 32 pas (typiquement 12 pas). Le nombre de pas en translation est par exemple de 1 à 10 crans (typiquement 1 cran dans chaque direction pour obtenir un bouton « push/pull » avec un état stable entre les deux crans).

Pour détecter le sens du mouvement en rotation et/ou en translation, le codeur dispose généralement d'au moins deux détecteurs (pour la rotation et/ou la translation) décalés physiquement entre eux (typiquement un nombre impair de quart de pas). Ces deux détecteurs permettent l'encodage du mouvement en rotation et/ou en translation sur deux bits. Ainsi, l'encodage donne les valeurs successives suivantes : 00, 01, 11, 10 lorsque le codeur tourne et/ou translate dans un sens et les valeurs successives suivantes : 00, 10, 11, 01 lorsque le codeur tourne et/ou translate dans l'autre sens. Il est donc possible de déterminer non seulement l'apparition d'un incrément en rotation et/ou en translation (changement d'état de l'un des bits) mais aussi le sens de rotation et/ou en translation (par comparaison entre un état détecté et l'état immédiatement antérieur).

En ce qui concerne la capacité de crantage des codeurs, le passage de cran encodé entraîne généralement un retour tactile qu'un opérateur doit ressentir lors de la manoeuvre du dispositif. Le couple de crantage angulaire peut par exemple être de l'ordre de 1 à 700 mN.m (typiquement 12 mN.m) et l'effort de crantage linéaire de l'ordre de 0,5 à 20 N (typiquement 6 N).

Les codeurs les plus complexes disposent d'encodage et de crantage en rotation et en translation. L'encodage et le crantage en rotation ne doivent pas être bloqués par ceux en translation. Dans ce cas, la détection et le crantage en rotation et en translation doivent pouvoir être utilisés simultanément sans perte de performance. Par exemple, pour saisir une vitesse, le pilote devra simultanément pousser le bouton du codeur et le tourner jusqu'à la valeur choisie.

Enfin, dans certain cas, pour sécuriser le codeur et notamment pour garantir son niveau de sécurité DAL (par exemple DAL A), les fonctions de détection (ou d'encodage) sont au moins doublées.

ÉTAT DE LA TECHNIQUE

Pour répondre aux besoins précités, les codeurs utilisés dans les applications aéronautiques sont souvent basés sur des solutions opto-mécaniques (détection optique et crantage mécanique) ou électromécanique (détection par contact électrique et crantage mécanique) et parfois magnéto-mécanique (détection magnétique et crantage mécanique) ou opto-magnétique ou même purement magnétique.

Par exemple, des codeurs opto-mécaniques sont décrits dans les documents FR 2937129 et FR 2954491. Selon ces documents, la détection en rotation et/ou en translation (encodage) est faite par un codeur optique alors que le maintien en position stable (crantage) est assuré mécaniquement par au moins une bille mise en pression par un ressort sur un chemin de bille (ou came). Même si ces dernières innovations répondent aux besoins décrits ci-dessus et visent à simplifier leur réalisation, ces codeurs opto-mécaniques et électromécaniques demeurent des assemblages complexes constitués de nombreuses pièces de grande précision.

Plus généralement, les solutions actuelles à crantage mécanique génèrent de la friction (exemple : bille contre came) et de l'usure ce qui limite la durée de vie du dispositif, notamment lorsque des pièces en plastique sont utilisées. Dans les codeurs électromécaniques, la détection et le crantage sont parfois liés par au moins une pièce mécanique commune qui sert à la fois au click et à la détection via un contact électrique. Ce dernier est souvent exposé au risque d'usure, de « fretting corrosion » (corrosion de contact) et limite la durée de vie du dispositif. De plus, dans les dispositifs opto-mécaniques et parfois électromécaniques, la détection et le crantage sont découplés, c'est-à-dire qu'ils résultent de solution et/ou phénomène différents et sont assez éloignés physiquement. Ce découplage augmente le nombre de pièces et par conséquent, le risque de décalage entre la détection et le crantage. Dans le cas de codeur complexe et sécurisé, le nombre de pièces est encore plus important. Dans ce cas, pour assurer une bonne performance et fiabilité, les codeurs complexes actuels requièrent des pièces de grande précision qui sont plus coûteuses.

On connaît également le document FR 2370350 qui décrit un codeur magnétique rotatif à aimants mobiles dans lequel le crantage et l'encodage sont issus du phénomène magnétique. Toutefois, le codeur de ce document est uniquement rotatif et utilise des aimants mobiles qui sont exposés à des risques de frottement et de coincement.

En résumé, les solutions électromécaniques présentent le plus fort risque de fatigue tant au niveau du crantage que de l'encodage car elles génèrent le plus de frottement. Par ailleurs, l'encodage électrique est exposé à la corrosion de contact (« fretting corrosion »). Ces inconvénients diminuent la fiabilité et limitent la durée de vie du dispositif.

Les solutions opto-mécaniques et magnéto-mécaniques conservent le risque de fatigue au niveau du crantage mécanique.

Les solutions opto-magnétiques utilisent des phénomènes sans contact différents. Ces solutions sont plus encombrantes si on souhaite faire un codeur plus complexe (exemple : codeur rotatif avec « push/pull ») et sécurisé.

Enfin, les solutions purement magnétiques connues ne permettent pas de répondre à l'ensemble des besoins précités et présentent parfois un encombrement important.

RÉSUMÉ DE L'INVENTION

La présente invention a pour but de proposer un codeur incrémental répondant à l'ensemble des besoins précités (compacité, capacité d'effectuer des multi-tours en rotation et/ou une course linéaire, capacité d'incrémentation et de crantage, etc.), tout en présentant des fonctions de crantage et de détection (codage) sans friction et sans usure, un nombre de pièces limité, un montage simplifié et des risques diminués de blocage et de décalage. De plus, le codeur incrémental selon l'invention peut être rendu particulièrement compact. En outre, il est possible de régler l'effort de crantage assuré par ce codeur de manière particulièrement précise et simple.

À cet effet, l'invention concerne un codeur magnétique incrémental définissant un axe de codeur et comprenant un corps fixe et un corps mobile par rapport au corps fixe selon au moins une direction de codage ;

l'un des corps, dit premier corps, comprenant :

- un premier support comprenant N éléments magnétiques disposés le long de la direction de codage selon un pas homogène P0 et définissant une alternance magnétique le long de cette direction ;

l'autre corps, dit deuxième corps, comprenant :

- un deuxième support comprenant K*M éléments magnétiques disposés de manière inhomogène le long de la direction de codage en regard des N éléments magnétiques, les K*M éléments magnétiques formant M groupes de K éléments magnétiques, chacun des M groupes comprenant un élément magnétique initial de ce groupe, les éléments initiaux des M groupes différents étant espacés entre eux le long de la direction de codage selon un pas homogène P1, les K-1 éléments magnétiques de chaque groupe étant espacés de l'élément magnétique initial de ce groupe selon des pas variables Pi rebouclés sur une étendue prédéterminée le long de la direction de codage ;
- au moins un détecteur magnétique disposé en regard du premier support et configuré pour quantifier chaque mouvement du corps mobile selon la direction de codage.

Muni de ces caractéristiques, le codeur selon l'invention permet en effet de mettre en oeuvre un codage selon l'une des directions choisies, par exemple parmi la direction de translation et la direction de rotation, tout en assurant un crantage selon la même direction. Selon l'invention, le codage et le crantage sont créés par le même effet magnétique entre le corps mobile et le corps fixe.

Ainsi, l'arrangement de ces deux corps peut être choisi de sorte à minimiser leur contact mécanique. Par exemple, les éléments détaillés ci-dessus du corps fixe et du corps mobile ne présentent aucun contact entre eux. Ainsi, ces éléments fonctionnent sans friction et sans usure mécanique prématurée. Cela garantit donc la fiabilité à l'usage du codeur et rallonge considérablement sa durée de vie même lorsque des pièces en plastique sont utilisées. De plus, ces éléments sont en nombre limité ce qui permet de les disposer facilement au sein des corps correspondants. En particulier, le nombre d'éléments magnétiques sur le deuxième corps peut être réduit par rapport à celui sur le premier corps, tout en assurant un nombre de crantages et un effort nécessaires. Cela permet alors de rendre le codeur davantage compact et de réduire le nombre de pièces nécessaires à son fonctionnement.

Cela fait alors le montage du codeur particulièrement simple et diminue les risques de blocage et de décalage de différentes pièces entre elles.

Suivant d'autres aspects avantageux de l'invention, le codeur comprend une ou plusieurs des caractéristiques suivantes, prise(s) isolément ou suivant toutes les combinaisons techniquement possibles :

- le deuxième corps comprend M détecteurs magnétique, chaque détecteur magnétique étant configuré pour quantifier chaque mouvement du corps mobile selon la direction de codage ;

- le ou chaque détecteur magnétique est disposé sur le deuxième support dans un interstice formé entre deux groupes de K éléments magnétiques ;

- les M groupes de K éléments magnétiques définissent les mêmes pas variables Pi ;

- chaque pas variable Pi est défini selon la relation suivante :

$$\mathrm{Pi} = k_i \frac{\mathrm{L}}{\mathrm{N}}$$

  où

  L est ladite étendue prédéterminée ;
  $k_i$ est un nombre naturel choisi différent pour chaque pas variable.

- au sein de chaque groupe, les éléments magnétiques sont espacés de manière homogène entre eux ;

- au moins un élément magnétique de l'un des M groupes de K éléments magnétiques est disposé entre deux éléments magnétiques d'un autre groupe de K éléments magnétiques ;

- le deuxième corps est le corps fixe ;

- la direction de codage correspond à une translation le long de l'axe de codeur ou à une rotation autour de l'axe de codeur ;

- le corps mobile est mobile par rapport au corps fixe selon en outre une direction de codage supplémentaire perpendiculaire à ladite direction de codage ;

- le premier corps et le deuxième corps comprennent une pluralité d'éléments magnétiques supplémentaires disposés selon la direction de codage supplémentaire sur les deux corps au moins partialement en regard.

DESCRIPTION DES FIGURES

Ces caractéristiques et avantages de l'invention apparaitront à la lecture de la description qui va suivre donnée uniquement à titre d'exemple et non limitatif, et faite en référence aux dessins annexés, sur lesquels :

- [Fig.1] la figure 1 est une vue schématique en perspective d'un codeur magnétique selon un premier mode de réalisation de l'invention, le codeur étant fixé partiellement derrière un panneau formant une planche de bord ;

- [Fig.2] la figure 2 est une vue en perspective éclatée du codeur de la figure 1 ;

- [Fig.3] la figure 3 présente une vue partielle d'une coupe selon le plan longitudinal III de la figure 1 ;

- [Fig.4] la figure 4 est une vue en perspective des éléments internes fonctionnels du corps mobile de la figure 1, ces éléments comprenant notamment un anneau de translation et un anneau de rotation ;

- [Fig.5] la figure 5 est une vue partielle en coupe de l'anneau de translation de la figure 4 avec un anneau de translation du corps fixe ;

- [Fig.6] la figure 6 sont deux diagrammes illustrant différentes options d'agencement d'éléments magnétiques sur l'anneau de translation de la figure 4 ;

- [Fig.7] la figure 7 est une vue en coupe de l'anneau de rotation de la figure 4 avec un anneau de rotation du corps fixe ;

- [Fig.8] la figure 8 sont deux diagrammes illustrant différentes options d'agencement d'éléments magnétiques sur l'anneau de rotation de la figure 4 ;

- [Fig.9] la figure 9 est une vue analogue à celle de la figure 7 illustrant un autre exemple de réalisation du corps fixe ;

- [Fig.10] la figure 10 est un diagramme illustrant des efforts de crantage et les signaux de deux détecteurs obtenus dans le codeur de la figure 1 ;

- [Fig.11] figure 11 est une vue schématique en perspective d'un codeur magnétique selon un deuxième mode de réalisation de l'invention, le codeur étant fixé partiellement derrière un panneau formant une planche de bord ; et

- [Fig.12] la figure 12 est une vue en perspective des éléments internes fonctionnels du corps mobile de la figure 11.

## DESCRIPTION DÉTAILLÉE DE L'INVENTION

### PREMIER MODE DE RÉALISATION

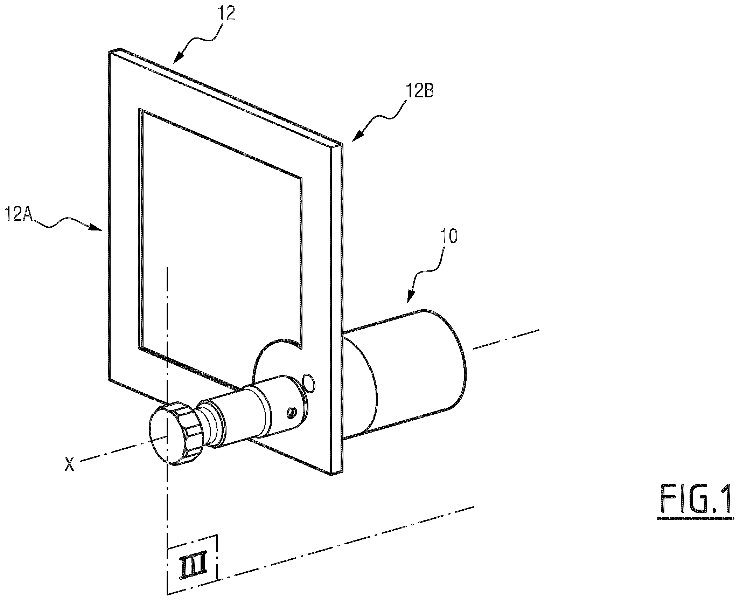

La figure 1 illustre en effet un codeur magnétique incrémental 10 selon un premier mode de réalisation de l'invention. De préférence, le codeur 10 est monté dans un cockpit permettant de piloter un aéronef.

Par « aéronef », on entend tout engin volant, tel qu'un avion, un hélicoptère ou un drone par exemple. Un tel aéronef peut être piloté directement à partir de celui-ci. Dans un tel cas le cockpit est avantageusement arrangé à l'intérieur de l'aéronef. Selon un autre exemple de réalisation, un tel aéronef est contrôlé à distance. Dans un tel cas, le cockpit est disposé à distance de l'aéronef et présente par exemple une station au sol. Dans tous les cas, l'aéronef est configuré pour être piloté par un opérateur, par exemple par un pilote à partir du cockpit disposé à l'intérieur de l'aéronef.

Selon l'invention, le codeur 10 permet à l'opérateur de contrôler au moins une fonctionnalité avionique. Par exemple, un tel codeur 10 peut être utilisé par l'opérateur pour contrôler un système avionique et fait partie d'un système de contrôle d'un tel système avionique. En variante, le codeur 10 fait partie d'un système de contrôle de plusieurs systèmes avioniques. Par exemple, le codeur 10 selon l'invention fait partie d'un système dit « Flight Control Unit » (FCU) ou « Integrated Standby Instrument System » (ISIS) ou « Closer Control Device » (CCD) ou « Keyboard Cursor Control Device » (KCCD), etc.

Dans l'exemple de la figure 1, le codeur 10 est intégré partiellement dans un panneau 12. Ce panneau 12 forme par exemple une planche de bord du cockpit de l'aéronef pour l'un des systèmes de contrôle précité. Dans l'exemple de la figure 1, le codeur 10 est arrangé partiellement dans la partie avant 12A du panneau 12 et partiellement dans la partie arrière 12B de ce panneau 12. En particulier, dans l'exemple de la figure 1, la partie avant 12A du panneau 12 est orientée vers l'opérateur alors que la partie arrière 12B de ce panneau est orientée vers la partie interne de la planche de bord. Bien entendu, d'autres exemples d'arrangement du codeur 10 par rapport au panneau 12 ou par rapport à tout autre moyen de fixation sont également possibles.

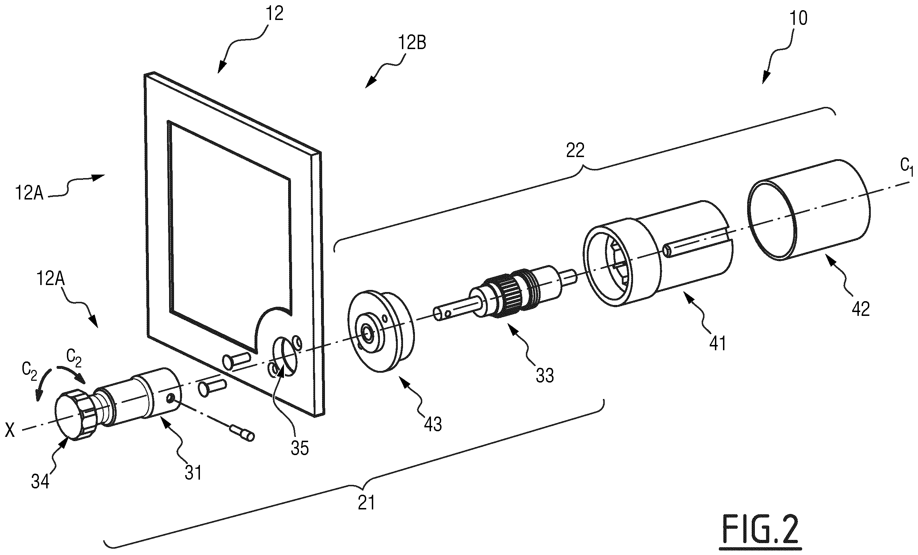

En référence à la figure 2, le codeur 10 comprend un corps mobile 21, appelé également dans l'exemple de cette figure premier corps, et un corps fixe 22, appelé également dans l'exemple de cette figure deuxième corps.

Le corps mobile 21 comprend un bouton 31 et un rotor 33.

Le bouton 31 fait saillie par rapport au panneau 12 et est arrangé dans la partie avant 12A de ce panneau 12. Le bouton 31 est mobile en translation le long d'un axe de codeur X et en rotation autour de l'axe de codeur X. Plus particulièrement, le bouton 31 est mobile selon une première direction de codage C1 qui correspond dans cet exemple à la direction de translation selon l'axe de codeur X et une deuxième direction de codage C2 qui correspond dans cet exemple à la direction de rotation autour de l'axe de codage X. Avantageusement, le bouton 31 est mobile dans chaque sens selon chaque direction de codage C1, C2. En particulier, dans la direction de rotation, le bouton 31 est mobile en rotation dans le sens horaire et antihoraire, et dans la direction de translation, le bouton 31 est mobile dans le sens vers la planche de bord et vers l'opérateur. Avantageusement, le bouton 31 définit notamment une surface de bouton 34 qui est destinée à être orientée vers l'opérateur. Cette surface 34 représente donc une surface extérieure du bouton 31 qui est visible par l'opérateur et peut être saisie par l'opérateur.

Le rotor 33 s'étend selon l'axe de codeur X de sorte à former sur l'une de ses extrémités une liaison solidaire avec le bouton 31. Ainsi, tout comme le bouton 31, le rotor 33 est mobile selon la première direction de codage C1 et selon la deuxième direction de codage C2 dans chaque sens de mouvement précité. Le rotor 33 forme un support où il reçoit des éléments internes fonctionnels du corps mobile 21 qui seront expliqués plus en détail par la suite.

Le corps fixe 22 comprend un support 41, un capot 42 et une flasque 43.

La flasque 43 est par exemple disposée dans un trou passant 35 du panneau 12 et permet de supporter le bouton 31 et le rotor 33. Dans l'exemple de la figure 2, la flasque 43 est fixée sur le panneau 12 tout en restant dans la partie arrière 12B de celui-ci, en utilisant par exemple des vis accessibles à partir de la partie avant 12B du panneau 12.

Le support 41 reçoit des éléments internes fonctionnels du corps fixe 22 qui sont destinés à coopérer avec les éléments internes fonctionnels du corps mobile 21 comme cela sera expliqué plus en détail par la suite. En particulier, et comme cela sera apparent par la suite, les éléments internes fonctionnels du corps fixe 22 sont maintenus par le support 41 à distance par rapport à ceux du corps mobile 21. Pour ce faire, le support 41 est configuré pour recevoir au moins partiellement le rotor 33 avec les éléments internes fonctionnels du corps mobile 21 portés par ce rotor 33.

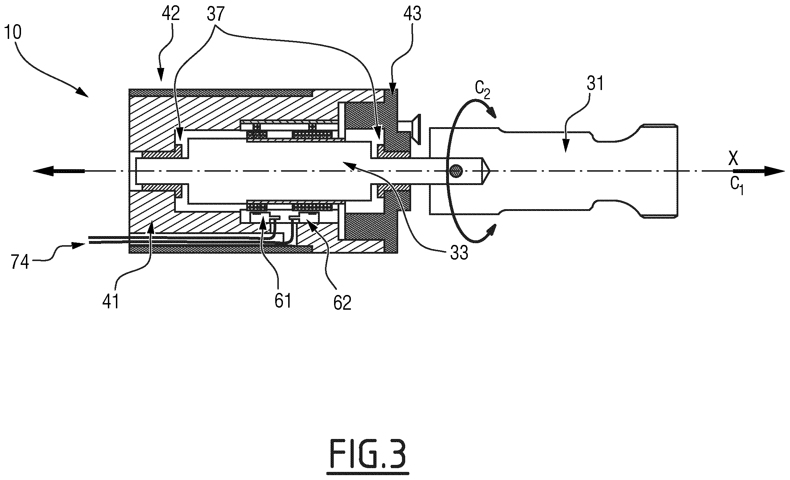

Le support 41 est par exemple relié au corps mobile 21 via une liaison mobile dans chaque direction de codage. Cette liaison peut par exemple être formée à chaque extrémité du rotor 33 et présenter des paliers lisses, par exemple des paliers en polymère ou paliers en bronze frittés. Ces paliers sont préférentiellement à collerette pour servir de butée mécanique. Selon un autre exemple, ces paliers sont des paliers à élément roulant tel que des douilles à billes. La figure 3 fait notamment apparaître les paliers 37 reliant le rotor 33 au deuxième corps 22. Dans l'exemple de cette figure, les paliers 37 relient une extrémité du rotor 33 directement au support 41 et l'autre extrémité du rotor 33 au support 41 via la flasque 43. Dans cet exemple, la flasque 43 est configurée pour coopérer avec le support 41 afin de le fixer au panneau 12

Le capot 42 est destiné à protéger l'ensemble des composants du codeur 10 qui sont disposés dans la partie arrière 12B du panneau 12.

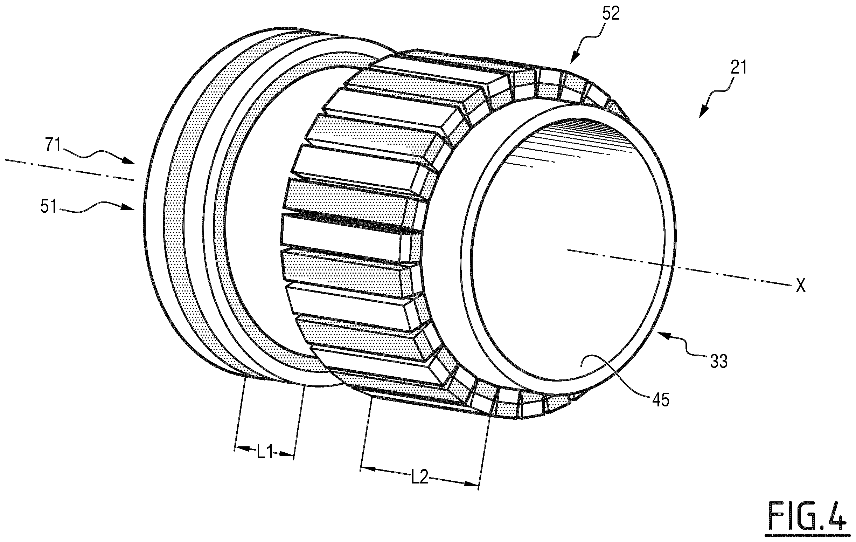

Dans l'exemple de la figure 4 illustrant plus en détail les éléments internes fonctionnels du corps mobile 21, le rotor 33 présente par exemple un arbre 45 creux de forme cylindrique s'étendant selon l'axe de codeur X.

En référence à cette figure 4, les éléments internes fonctionnels du corps mobile 21 comprennent un premier anneau 51, dit anneau de translation, et un deuxième anneau 52, dit anneau de rotation. Chacun de ces anneaux 51, 52 est fixé sur l'arbre 45 le long de l'axe de codeur X et reste espacé de l'autre anneau 51, 52. En outre, chacun de ces anneaux 51, 52 présente une alternance magnétique : axiale dans le cas de l'anneau de translation 51 et circonférentielle dans le cas de l'anneau de rotation 52.

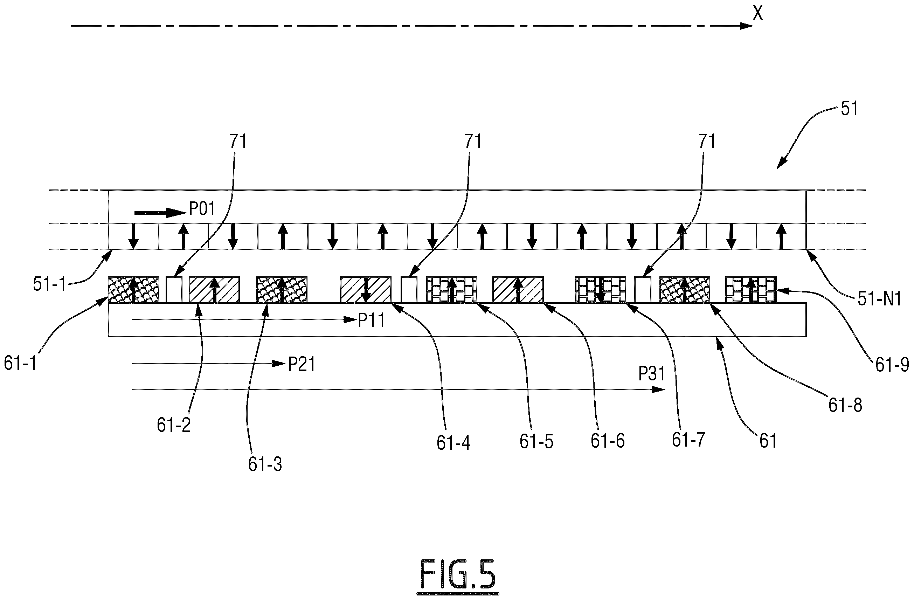

La figure 5 illustre la partie basse de l'anneau de translation 51 en coupe. Ainsi, en référence à cette figure 5, l'anneau de translation 51 s'étend selon l'axe de codeur X et présente N1 anneaux élémentaires 51-1 à 51-N1 disposés l'un à côté de l'autre, par exemple par collage. Le nombre N1 est par exemple compris entre 3 et 20. Chaque anneau élémentaire 51-1, ... 51-N1 est par exemple réalisé en un seul bloc ou à partir de plusieurs aimants parallélépipédiques ou d'aimants en arc de cercle. Un tel anneau élémentaire peut également être issu d'un « polyaimants » ou d'un « aimant programmable » nommé Polymagnets®.

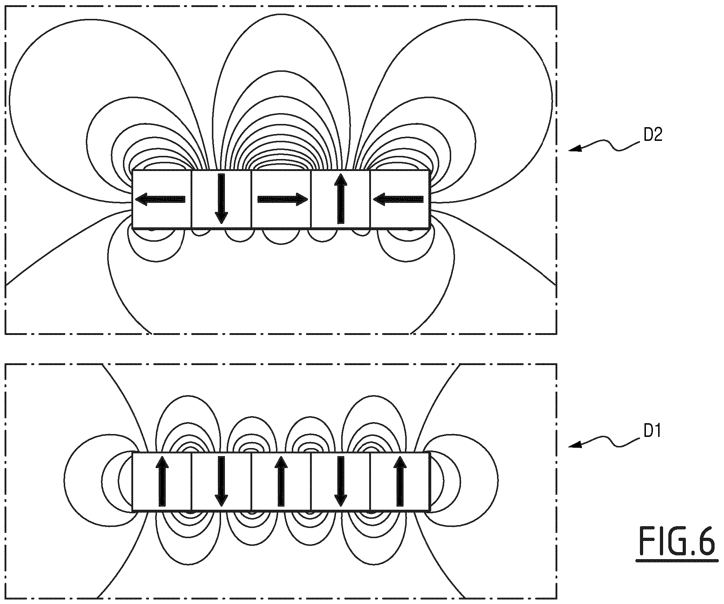

Afin d'atteindre une alternance magnétique axiale, dans l'exemple de la Figure 5, ces anneaux élémentaires 51-1, ..., 51-N1 présentent une aimantation radiale et sont disposés l'un à côté de l'autre de sorte que les anneaux adjacents soient magnétisés dans les sens opposés selon la direction radiale. Cette disposition des anneaux élémentaires forme un diagramme D1 des flux magnétiques illustré sur la figure 6 dans le cas de cinq anneaux élémentaires.

Selon un autre exemple de disposition possible, une alternance magnétique axiale est atteinte en utilisant un arrangement de type Halbach dont un diagramme D2 des flux magnétiques est illustré également sur la figure 6. En particulier, selon un tel type d'arrangement, les anneaux élémentaires sont magnétisés alternativement selon la direction radiale et circonférentielle. Par ailleurs, le sens de la magnétisation de chaque anneau élémentaire est choisi de sorte à concentrer le champ magnétique sur la surface de l'anneau de translation 51 en regard des éléments internes fonctionnels du corps fixe 22. Dans l'exemple de l'arrangement représenté sur la figure 4, un tel champ magnétique est concentré sur la surface extérieure de l'anneau de translation 51.

L'anneau de translation 51 présente une largeur L1 correspondant à son étendue selon l'axe de codeur X. Cette largeur L1 est formée d'une somme des largeurs des anneaux élémentaires 51-1, ..., 51-N1 formant cet anneau de translation 51. La largeur de chaque anneau élémentaire forme un pas P01. Selon un exemple de réalisation, les anneaux élémentaires présentent une même largeur. Dans un tel cas, l'anneau de translation 51 présente un pas P01 homogène qui peut être déterminé selon la relation suivante :

$$P01 = \frac{L1}{N1}.$$

Dans l'exemple de la figure 5, parmi les anneaux élémentaires 51-1, ..., 51-N1, les anneaux élémentaires 51-2, ..., 51-N1-1 sont disposés entre les anneaux élémentaires 51-1, 51-N1. Les anneaux élémentaires 51-2, ..., 51-N1-1 sont alors appelés anneaux centraux et les anneaux élémentaires 51-1, 51-N1 sont appelés anneaux périphériques.

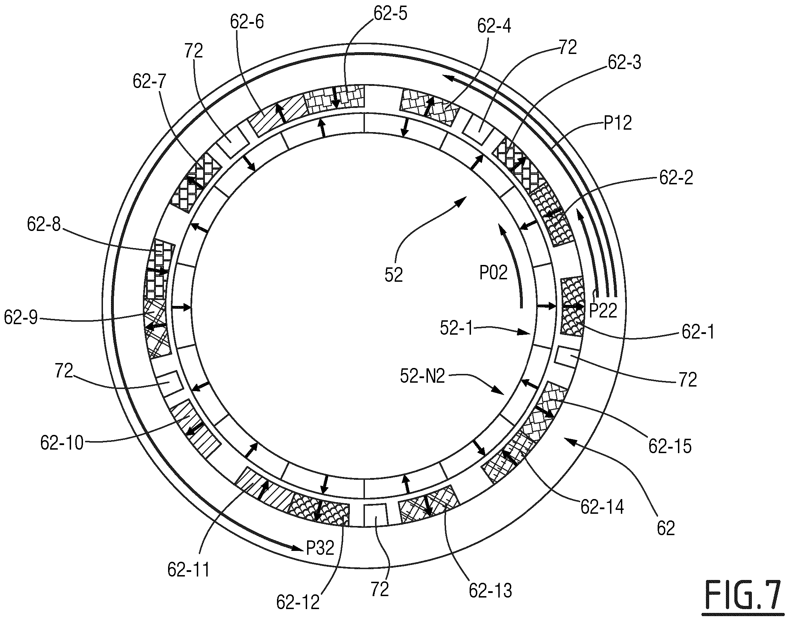

L'anneau de rotation 52 est illustré plus en détail sur la figure 7. Cet anneau de rotation 52 s'étend également selon l'axe de codeur X et présente une largeur L2 (visible sur la figure 4) correspondant à son étendue longitudinale. Avantageusement, la largeur L2 est supérieure à la largeur L1 de l'anneau 51 de translation, notamment lorsque les étendues longitudinales de toutes les pièces élémentaires (expliquées ci-dessous) sont sensiblement identiques. L'anneau de rotation 52 est par exemple de même diamètre que l'anneau de translation 51.

L'alternance magnétique circonférentielle de l'anneau de rotation 52 est atteinte par une disposition particulière d'une pluralité de pièces élémentaires 52-1, ..., 52-N2 formant cet anneau de rotation 52, chaque pièce élémentaire 52-1, ..., 52-N2 présentant par exemple un aimant permanent. Chaque pièce élémentaire 52-1, ..., 52-N2 peut par exemple présenter une forme sensiblement parallélépipédique qui est allongée selon l'axe de codeur X. Cette forme peut par exemple être légèrement incurvée afin de former un arc de cercle autour de l'axe de codeur X.

Les pièces élémentaires 52-1, ..., 52-N2 sont disposées l'une à côté de l'autre par exemple par collage selon la direction circonférentielle. L'étendue circonférentielle de chaque pièce élémentaire forme un pas P02. Il s'agit d'un pas P02 homogène lorsque l'ensemble des pièces élémentaires 52-1, ..., 52-N2 présentent une même étendue circonférentielle. Ce pas peut être exprimé sous forme angulaire comme suit :

$$P02 = \frac{2\pi}{N2}.$$

Comme dans le cas des anneaux élémentaires, chaque pièce élémentaire 52-1, ..., 52-N2 est par exemple réalisée en un seul bloc ou à partir de plusieurs aimants parallélépipédiques ou d'aimants en arc de cercle. Une telle pièce élémentaire peut également être issue d'un « polyaimants » ou d'un « aimant programmable » nommé Polymagnets®.

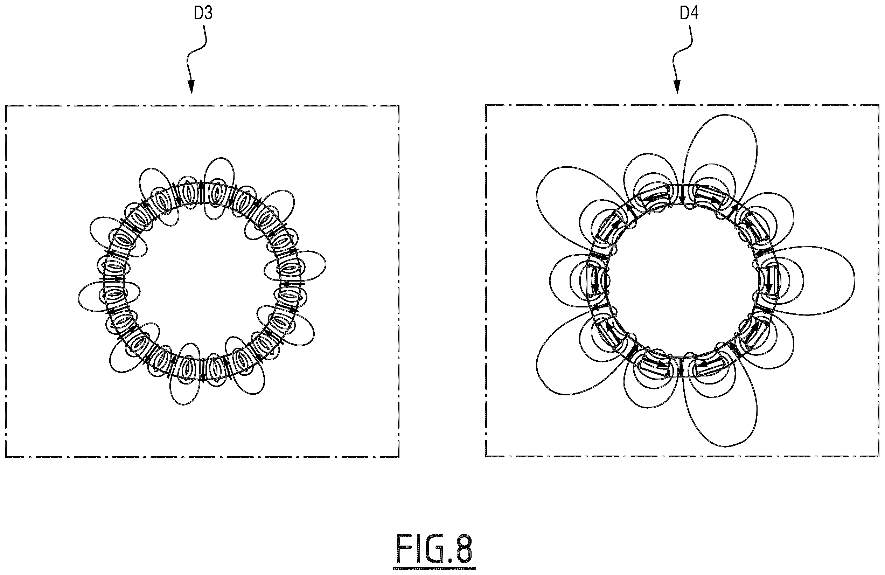

Dans l'exemple de la figure 7, les pièces élémentaires 52-1, ..., 52-N2 présentent une aimantation radiale et sont disposés l'une à côté de l'autre de sorte que les pièces élémentaires adjacentes soient magnétisées dans les sens opposés selon la direction radiale. Cette disposition des pièces élémentaires forme un diagramme D3 des flux magnétiques illustré sur la figure 8.

Selon un autre exemple de disposition possible, une alternance magnétique circonférentielle est atteinte en utilisant un arrangement de type Halbach dont un diagramme D4 des flux magnétiques est illustré également sur la figure 8. En particulier, selon un tel type d'arrangement, les pièces élémentaires 52-1, ..., 52-N2 sont magnétisées alternativement selon la direction radiale et circonférentielle. Par ailleurs, comme dans le cas précédent, le sens de la magnétisation de chaque pièce élémentaire 52-1, ..., 52-N2 est choisi de sorte à concentrer le champ magnétique sur la surface de l'anneau de rotation 52 en regard des éléments internes fonctionnels du corps fixe 22. Dans l'exemple de l'arrangement de la figure 4, un tel champ magnétique est concentré sur la surface extérieure de l'anneau de rotation 52.

Les éléments internes fonctionnels du corps fixe 22 comprennent une pluralité de détecteurs magnétiques de translation 71 appelés également premiers détecteurs magnétiques, une pluralité de détecteurs magnétiques de rotation 72, appelés également deuxièmes détecteurs magnétiques, un anneau de translation 61 et un anneau de rotation 62. Dans l'exemple des figures, ces éléments 61, 62, 71, 72 sont fixés sur une surface intérieure du support 41 (représenté sur la figure 2) du corps fixe 22. En outre, comme mentionné précédemment, ces éléments 61, 62, 71, 72 sont maintenus à distance des anneaux 51 et 52 correspondants du corps mobile 21.

Les éléments 61, 71 sont visibles plus en détail sur la figure 5.

En particulier, l'anneau de translation 61 du corps fixe 22 est disposé autour de l'anneau de translation 51 du corps mobile 21 de sorte que la surface extérieure de l'anneau de translation 51 du corps mobile 21 soit en regard de la surface intérieure de l'anneau de translation 61 du corps fixe 22. Cela est notamment visible sur la figure 5 présentant une coupe de la partie basse des deux anneaux de translation 51, 61.

Tout comme l'anneau de translation 51 du corps mobile 21, l'anneau de translation 61 du corps fixe 22 s'étend selon l'axe de codeur X et présente par exemple la même étendue axiale L1 ou alors une étendue différente. Par exemple, cette étendue peut être inférieure à L1 ou supérieure à L1. Dans un tel cas, il est possible d'atteindre un effort de crantage sensiblement constant sur toute la course de translation. La différence des étendues axiales de ces anneaux de translations 51, 61 représente la course de translation.

En outre, l'anneau de translation 61 du corps fixe 22 comprend K1*M1 anneaux élémentaires 61-1 à 61-K1 *M1 disposés l'un à côté de l'autre de manière espacée et fixés sur un support commun, par exemple par colle. Chaque anneau élémentaire 61-1 à 61-K1*M1 est par exemple analogue aux anneaux élémentaires 51-1, ..., 51-N1 expliqués précédemment. Les anneaux élémentaires 61-1 à 61-K1 *M1 présentent par exemple une même étendue selon l'axe de codeur X. Cette étendue est par exemple égale à celle des anneaux élémentaires 51-1, ..., 51-N1 du corps mobile 21. Contrairement aux anneaux élémentaires 51-1, ..., 51-N1 du corps mobile 21, les anneaux élémentaires 61-1 à 61-K1 *M1 du corps fixe 22 sont espacés d'une manière inhomogène le long de l'axe de codeur X.

Le nombre K1*M1 est avantageusement strictement inférieur au nombre N1. Les K1*M1 anneaux élémentaires 61-1 à 61-K1*M1 forment M1 groupes de K1 éléments magnétiques.

Les M1 groupes sont espacés entre eux le long de l'axe de codeur X selon un pas homogène P11. Ce pas homogène P11 entre les groupes est mesuré par exemple entre les premiers anneaux élémentaires de ces groupes, suivant l'axe de codeur X. Ce pas homogène P11 peut être déterminé suivant la relation suivante :

$$P11 = \frac{L1}{M1}.$$

Au sein de chaque groupe, les K1-1 anneaux élémentaires sont espacés du premier anneau de ce groupe suivant des pas Pi1 variables, ici i correspondant à l'indice de l'anneau élémentaire au sein du groupe correspondant. Cet indice i est supérieur ou égal à 2 et inférieur ou égal à K1. Ce pas inhomogène Pi1 est déterminé selon la relation suivante :

$$Pi1 = k_i * \frac{L1}{N1} \quad , \qquad \text{où} \quad \forall k_i \in \mathbb{N}^*, \qquad \forall i \in [\![2, K1]\!]$$

où $k_i$ est un paramètre choisi pour chaque i.

Les pas Pi1 sont mesurés à partir du premier anneau du groupe correspondant, de manière bouclée dans l'étendue axiale L1. Autrement dit, lorsque la valeur j*P11+Pi1 excède L1 pour un certain i et un certain j pour une première fois, l'anneau élémentaire correspondant est placé à la distance j*P11+Pi1-L1 à partir d'une arête de l'anneau de translation 61 (arête gauche dans l'exemple de la figure 5).

Dans l'exemple de la figure 5, M1 est égal à 3 et K1 est égal à 3. Ainsi, au total, 9 anneaux élémentaires 61-1 à 61-9 sont disposés sur l'anneau de translation 61 du corps fixe 22. Sur cette figure, les anneaux élémentaires correspondant à un même groupe sont hachurés de la même façon. Les anneaux 61-1, 61-3 et 61-8, les anneaux 61-4, 61-6, 61-2 et les anneaux 61-7, 61-9 et 61-5, forment le même groupe d'anneaux. En particulier, les premiers anneaux élémentaires 61-1, 61-4 et 61-7 de ces groupes sont espacés par le pas homogène P11. Au sien de chaque groupe, le deuxième anneau élémentaire est espacé du premier anneau élémentaire par le pas P21 et le troisième anneau élémentaire est espacé du premier anneau élémentaire par le pas P31. Autrement dit, pour le premier groupe, l'anneau 61-3 est espacé de l'anneau 61-1 par le pas P21 et l'anneau 61-8 est espacé de l'anneau 61-1 par le pas P31.

Avantageusement, le nombre total de crans obtenus par la coopération entre les anneaux de translation 51, 61 est égal à $\frac{N1}{2} * M1$. Le pas résultant de crantage est donc calculé comme suit :

$$P = \frac{L1}{\frac{N1}{2} * M1},$$

lorsque M1 et N1 sont premiers entre eux (c'est-à-dire sans diviseur commun hors 1, par exemple M1 = 3 et N1 = 14).

Le nombre de détecteurs magnétiques de translation 71 est avantageusement égal au nombre M1 de groupes de K1 anneaux élémentaires. Ces détecteurs magnétiques de translation 71 sont disposés le long de l'axe X, avantageusement dans des interstices formés entre différents anneaux élémentaires. Les détecteurs magnétiques de translation 71 permettent de quantifier le déplacement de l'anneau de translation 51 du corps mobile 21 le long de l'axe de codeur X. Autrement dit, ces détecteurs 71 permettent de coder chaque déplacement de l'anneau de translation 51 du corps mobile 21 le long de l'axe de codeur X en détectant des changements dans le flux magnétique grâce à l'alternance magnétique axiale des anneaux élémentaires constituant cet anneau de translation 51. Par exemple, les détecteurs 71 sont décalés l'un de l'autre du pas P11 tout comme les groupes d'anneaux élémentaires.

Dans l'exemple de la figure 5, un détecteur magnétique de translation 71 est disposé après le premier anneau élémentaire de chaque groupe d'anneaux.

Chaque détecteur magnétique 71 présente par exemple un capteur à effet Hall ou un capteur magnéto-résistif ou un solénoïde. En outre, chaque détecteur magnétique 71 est relié à un contrôleur externe du codeur 10 par des câbles 74 visibles sur la figure 3.

Tout comme l'anneau de rotation 52 du corps mobile 21, l'anneau de rotation 62 du corps fixe 22 s'étend selon l'axe de codeur X et présente par exemple la même étendue axiale L2. En outre, l'anneau de rotation 62 du corps fixe 22 comprend K2*M2 pièces élémentaires 62-1 à 62-K2 *M2 disposées de manière inhomogène le long de la direction circonférentielle sur un support commun formant un anneau. Chaque pièce élémentaire 62-1 à 62-K2*M2 est par exemple analogue aux pièces élémentaires 52-1, ..., 52-N2 expliqués précédemment.

Le nombre K2*M2 est avantageusement strictement inférieur au nombre N2.

Les K2*M2 pièces élémentaires 62-1 à 62-K2*M2 forment M2 groupes de K2 pièces élémentaires.

Les M2 groupes sont espacés entre eux le long de la direction circonférentielle selon un pas angulaire homogène P12. Ce pas homogène P12 entre les groupes est mesuré par exemple entre les premières pièces élémentaires de ces groupes, suivant la direction circonférentielle. Ce pas homogène P12 peut être déterminé suivant la relation suivante :

$$P12 = \frac{2\pi}{M2}.$$

Au sein de chaque groupe, les K2-1 pièces élémentaires sont espacées de la première pièce de ce groupe suivant des pas angulaires Pi2 variables, ici i correspondant à l'indice de la pièce élémentaire au sein du groupe correspondant. Cet indice i est supérieur ou égal à 2 et inférieur ou égal à K2. Ce pas variable Pi2 est déterminé selon la relation suivante :

$$Pi2 = k_i * \frac{2\pi}{N2} \quad , \qquad \text{où} \quad \forall k_i \in \mathbb{N}^*, \qquad \forall i \in [\![2, K2]\!]$$

où $k_i$ est un paramètre choisi pour chaque i.

Les pas Pi2 sont mesurés de manière bouclée suivant la direction circonférentielle. Autrement dit, lorsque la valeur j*P12+Pi2 excède $2\pi$ pour un certain i et un certain j pour une première fois, la pièce élémentaire correspondante est placée à l'angle j*P12+Pi2-$2\pi$ à partir d'un point de référence de l'anneau de rotation 62.

Dans l'exemple de la figure 7, M2 est égal à 5 et K2 est égal à 3. Ainsi, au total, 15 pièces élémentaires 62-1 à 62-15 sont disposées sur l'anneau de rotation 62 du corps fixe 22.

Sur cette figure, les pièces élémentaires correspondant à un même groupe sont hachurées de la même façon. Les pièces 62-1, 62-2, 62-12, les pièces 62-4, 62-5, 62-15, les pièces 62-7, 62-8, 62-3, les pièces 62-10, 62-11, 62-6 et les pièces 62-13, 62-14, 62-9 forment le même groupe de pièces élémentaires. En particulier, les premières pièces élémentaires 62-1, 62-4, 62-7, 62-10 et 62-13 sont espacées par le pas angulaire homogène P12. Au sien de chaque groupe, la deuxième pièce élémentaire est espacée de la première pièce élémentaire par le pas angulaire P22 et la troisième pièce élémentaire est espacée de la première pièce élémentaire par le pas angulaire P32. Autrement dit, pour le premier groupe, la pièce 62-2 est espacée de la pièce 62-1 par le pas P22 et la pièce 62-12 est espacée de la pièce 62-1 par le pas P32.

Avantageusement, le nombre total de crans obtenus par la coopération entre les anneaux de rotation 52, 62 est égal à $\frac{N2}{2} * M2$. Le pas angulaire résultant de crantage est donc calculé comme suit :

$$P = \frac{2\pi}{\frac{N2}{2} * M2},$$

lorsque M2 et N2 sont premiers entre eux (c'est-à-dire sans diviseur commun hors 1).

Le nombre de détecteurs magnétiques de rotation 72 est avantageusement égal au nombre M2 de groupes de K2 pièces élémentaires. Ces détecteurs magnétiques de rotation 72 sont disposés selon la direction circonférentiel autour de l'axe de codeur X, avantageusement dans des interstices formés entre différentes pièces élémentaires. Les détecteurs magnétiques de rotation 72 permettent de quantifier le déplacement de l'anneau 52 autour de l'axe de codeur X. Autrement dit, ces détecteurs 72 permettent de coder chaque déplacement de l'anneau de rotation 52 du corps mobile 21 autour de l'axe de codeur X en détectant des changements dans le flux magnétique grâce à l'alternance magnétique axiale des pièces élémentaires constituant cet anneau de translation 51. Par exemple, les détecteurs 72 sont décalés l'un de l'autre du pas P12 tout comme les groupes de pièces élémentaires.

Dans l'exemple de la figure 7, un détecteur magnétique de rotation 72 est disposé avant la première pièce élémentaire de chaque groupe de pièces.

Comme dans le cas précédent, chaque détecteur magnétique 72 présente par exemple un capteur à effet Hall ou un capteur magnéto-résistif ou un solénoïde. En outre, chaque détecteur magnétique 72 est relié à un contrôleur externe du codeur 10 par les câbles 74.

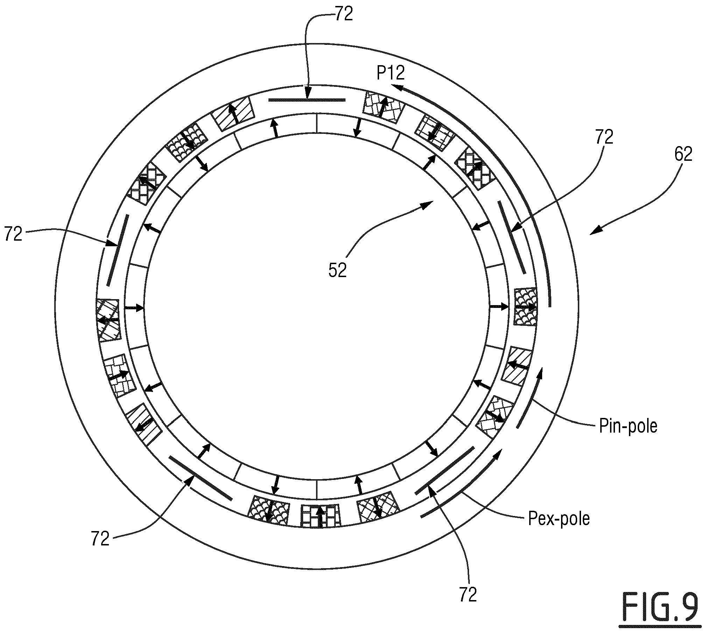

La figure 9 illustre un autre exemple de réalisation de l'anneau de rotation 62 du corps fixe 22 qui peut être combiné avec l'anneau de rotation 52 du corps mobile 21, comme expliqué précédemment. Selon cet exemple, l'anneau de rotation 62 du corps fixe 22 comprend également 5 groupes de 3 pièces élémentaires. Comme dans le cas précédent, ces groupes sont espacés du pas angulaire P12 qui est par exemple sensiblement égal à celui décrit en relation avec la figure 7.

Contrairement au cas précédent, les pas P22 et P32 au sein de chacun des M2 groupes sont adaptés pour que l'ensemble des pièces élémentaires 62-1 à 62-K2*M2 forment M2 regroupements géométriques ou pôles, chaque pôle comprenant K2 pièces élémentaires appartenant à des groupes différents. À la différence des groupes, aucune pièce élémentaire appartenant à un pôle n'est disposée entre deux pièces élémentaires appartenant à un autre pôle. Au sein d'un même pôle, les pièces élémentaires sont donc regroupées géométriquement alors qu'au sein d'un même groupe, les pièces élémentaires peuvent être disposées sur toute la longueur disponible. Avantageusement, il y a autant de pôles que de groupes.

En outre, les pôles sont équiespacés entre eux par la distance angulaire $P_{ex\_pole}$ le long de la direction circonférentielle. Au sein de chaque pôle, les pièces élémentaires sont également équiespacées entre elles par la distance angulaire $P_{in\_pole}$. Cette dernière distance $P_{in\_pole}$ est strictement inférieure à la distance d'espacement $P_{ex\_pole}$ de pôles entre eux.

Pour ce faire, chaque pas P22 est égal par exemple à $2\pi/3$ et chaque pas P32 est égal par exemple à $4\pi/3$. Selon cet exemple, les détecteurs magnétiques 72 sont placés dans les interstices entre les pôles. Dans certains exemples, les pièces élémentaires au sein de chaque pôle peuvent être agencées côte à côte, sans former d'interstices entre elles.

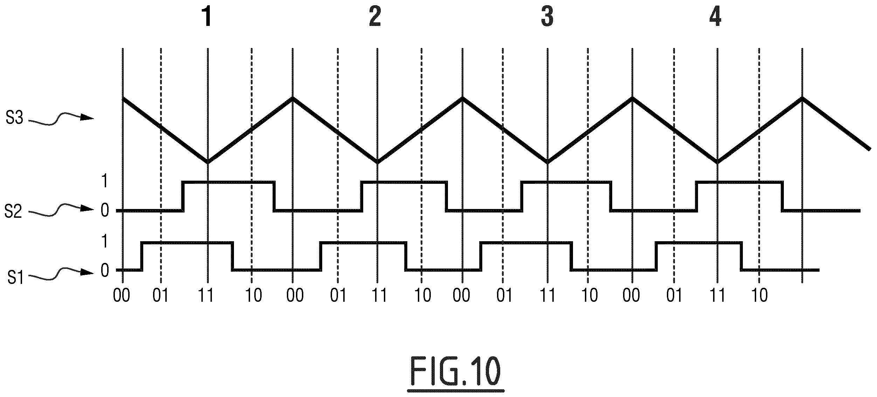

La figure 10 illustre un diagramme d'encodage effectué par au moins une paire de détecteurs magnétiques de translation 71 ou de rotation 72. Selon ce diagramme, l'un des détecteurs magnétiques de cette paire délivre un signal vrai ou faux lors du mouvement de l'anneau correspondant. Ce signal est dénoté par la référence S1 sur la figure 10. L'autre détecteur délivre quant à lui un signal S2 qui est décalé par rapport au signal S1 selon une fraction du pas de crantage. Ce signal S2 est également composé de valeurs vraies et faux qui alternent alors avec le mouvement de l'anneau correspondant selon la direction correspondante. Finalement, la figure 10 fait également apparaitre un tracé S3 qui correspond à l'effort ou au couple de crantage assuré lors du mouvement de l'anneau correspondant selon la direction correspondante. Ce tracé S3 est alors également périodique.

DEUXIEME MODE DE REALISATION.

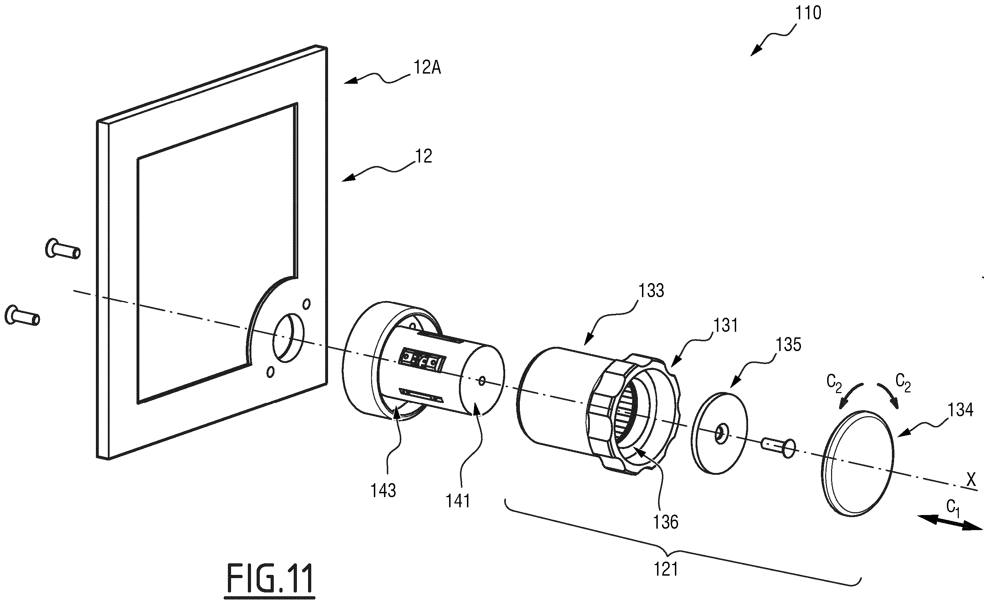

Le codeur 110 selon un deuxième mode de réalisation sera désormais expliqué en référence à la figure 11. L'application de ce codeur 110 est par exemple identique à celle du codeur 10 expliqué précédemment.

La différence principale du codeur 110 selon le deuxième mode de réalisation consiste en la manière de sa disposition par rapport au panneau 12. En effet, comme cela est illustré sur la figure 11, le codeur 110 selon le deuxième mode de réalisation est disposé entièrement dans la partie avant 12A du panneau 12.

Comme cela est illustré sur la figure 13, tout comme le codeur 10 selon le premier mode de réalisation, le codeur 110 selon le deuxième mode de réalisation comprend un corps mobile 121, appelé également premier corps, et un corps fixe 122, appelé également deuxième corps.

Le corps fixe 122 est fixé par exemple directement sur la partie avant 12A du panneau 12. Comme dans le cas précédent, le corps fixe 122 comprend un support 141 recevant les éléments internes fonctionnels de ce corps fixe 122 comme cela sera expliqué plus en détail par la suite. Le support 141 peut comprendre en outre une butée mécanique 143 intégrée dans l'une de ses extrémités.

Comme dans le cas précédent, le corps mobile 121 comprend également un bouton 131 et un rotor 133 qui est par exemple solidaire avec le bouton 131 disposé sur son extrémité. La même extrémité du rotor 133 est par exemple fermée par un capot 134 présentant une surface orientée vers l'opérateur. Le capot 134 est relié au rotor 133. Une rondelle 135 est solidaire avec le corps fixe 122 à son extrémité. Cette rondelle 135 peut présenter une butée mécanique lors de la rotation ou de la translation du corps mobile 121. Cette butée mécanique peut être amortie via un ressort de rappel ou une pièce en élastomère (exemple de matériau : EPDM). Par ailleurs, cette butée peut être également magnétique. Dans ce cas, cette butée peut être réalisée en plaçant un aimant solidaire du corps fixe en répulsion et au regard avec un aimant solidaire du corps mobile. Cette butée magnétique est intrinsèquement amortie. Cette butée magnétique peut être indépendante ou être une partie de l'un des anneaux 51, 52, 151 ou 152 (dans une logique d'optimisation du nombre de pièces). Par exemple, dans le cas d'un anneau du corps mobile utilisant un arrangement de type Halbach, un aimant du corps fixe peut être placé en répulsion et au regard de l'extrémité de cette anneau ayant localement une aimantation axiale ou circonférentielle. En outre, à chacune de ses extrémités, le rotor 133 peut présenter des paliers 136 destinés à coopérer avec le corps fixe 122 afin d'assurer le mouvement du corps mobile 121 selon chacune des directions de codage, à savoir une première direction de codage C1 correspondant à la direction de translation le long de l'axe de codeur X et une deuxième direction de codage C2 correspondant à la direction de rotation autour de cet axe de codeur X, dans l'exemple des figures.

Contrairement au cas précédent, le rotor 133 est destiné à englober au moins partiellement le corps fixe 122. Autrement dit, le rotor 133 est destiné à être disposé autour du support 141.

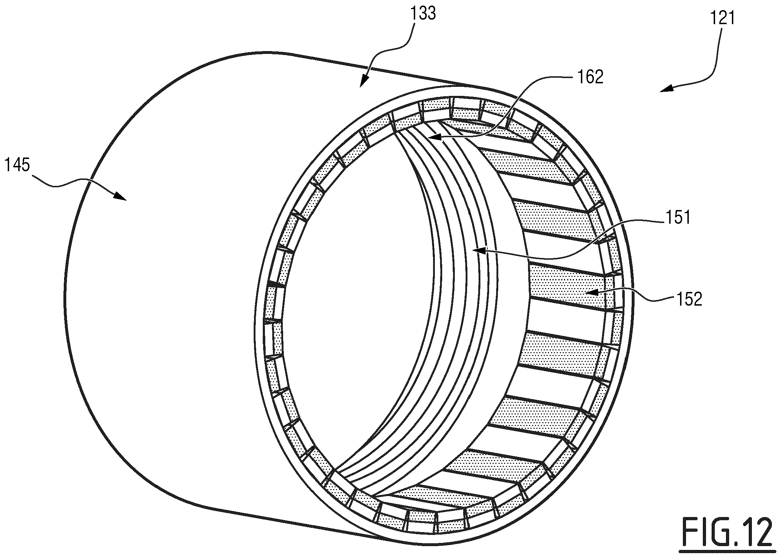

Comme cela est illustré sur la figure 12, tout comme dans le cas précédent, le corps mobile 121 comprend un anneau de translation 151, appelé également premier anneau, et un anneau de rotation 152, appelé également deuxième anneau. Ces anneaux sont similaires respectivement aux anneaux 51, 52 décrits précédemment. Contrairement au cas précédent, les anneaux 151, 152 selon le deuxième mode de réalisation sont disposés sur une surface intérieure du rotor 133 qui présente alors un arbre rotatif creux selon l'exemple de cette figure. Chacun de ces anneaux 151, 152 est fixé sur l'arbre 145 le long de l'axe de codeur X et reste espacé de l'autre anneau 151, 152.

Également de manière analogue au cas précédent, le corps fixe 122 comprend une pluralité de détecteurs magnétiques, un anneau de rotation et un anneau de translation (non-illustrés sur les figures). Contrairement au cas précédent, l'anneau de translation du corps fixe 122 avec les détecteurs correspondants sont disposés dans la partie interne de l'anneau de translation 151 du corps mobile 121 et l'anneau de rotation du corps fixe 122 avec les détecteurs correspondants sont disposés dans la partie interne de l'anneau de rotation 152 du corps mobile 121.

Autrement dit, selon ce mode de réalisation, les éléments internes fonctionnels du corps fixe 122 sont disposés sur une surface extérieure du support 141. Ainsi, selon ce mode de réalisation, ces éléments sont disposés en regard des surfaces intérieures des anneaux 151, 152 correspondants. Encore autrement dit, selon ce mode de réalisation, les éléments internes fonctionnels du corps fixe 122 sont reçus à l'intérieur des anneaux 151, 152, tout en restant à distance par rapport à ceux-ci. Le fonctionnement et l'arrangement respectif de ces éléments internes sont analogues à ceux décrits précédemment en relation avec le premier mode de réalisation.

AUTRES MODES DE RÉALISATION

Nombreux autres modes de réalisation sont également possibles. En particulier, toutes les caractéristiques décrites précédemment en relation avec le corps fixe (notamment en relation avec les anneaux de translation et/ou de rotation du corps fixe) peuvent être appliquées également au corps mobile. Dans ce cas, le corps fixe peut comprendre les caractéristiques décrites en relation avec le corps mobile dans les modes de réalisation précédents.

En outre, il est clair que le pas variable expliqué en relation avec les anneaux/pièces élémentaires peut s'appliquer seulement à l'un des anneaux de translation ou de rotation. Dans ce cas, un pas homogène peut être appliqué aux anneaux/pièces élémentaires de l'autre anneau pour obtenir un crantage dans la direction de codage désiré. Par ailleurs, tout autre moyen permettant d'atteindre un tel crantage est également possible. Enfin, une seule direction de codage peut être munie d'un crantage.

**Revendications**

1. Codeur magnétique incrémental (10 ; 110) définissant un axe de codeur (X) et comprenant un corps fixe et un corps mobile par rapport au corps fixe selon au moins une direction de codage (C1, C2) ;

    l'un des corps, dit premier corps (21 ; 121), comprenant :

    - un premier support (33 ; 133) comprenant N éléments magnétiques disposés le long de la direction de codage (C1, C2) selon un pas homogène P0 et définissant une alternance magnétique le long de cette direction (C1, C2) ;

    l'autre corps, dit deuxième corps (22 ; 122), comprenant :

    - un deuxième support (41 ; 141) comprenant K*M éléments magnétiques disposés de manière inhomogène le long de la direction de codage (C1, C2) en regard des N éléments magnétiques, les K*M éléments magnétiques formant M groupes de K éléments magnétiques, chacun des M groupes comprenant un élément magnétique initial de ce groupe, les éléments initiaux des M groupes différents étant espacés entre eux le long de la direction de codage (C1, C2) selon un pas homogène P1, les K-1 éléments magnétiques de chaque groupe étant espacés de l'élément magnétique initial de ce groupe selon des pas variables Pi rebouclés sur une étendue prédéterminée le long de la direction de codage (C1, C2) ;
    - au moins un détecteur magnétique (71, 72) disposé en regard du premier support (33 ; 133) et configuré pour quantifier chaque mouvement du corps mobile selon la direction de codage (C1, C2),

    dans lequel, au sein de chaque groupe, les éléments magnétiques sont espacés de manière homogène entre eux.

2. Codeur (10 ; 110) selon la revendication 1, dans lequel le deuxième corps (22 ; 122) comprend M détecteurs magnétique (71, 72), chaque détecteur magnétique (71, 72) étant configuré pour quantifier chaque mouvement du corps mobile selon la direction de codage (C1, C2).

3. Codeur (10 ; 110) selon la revendication 1 ou 2, dans lequel le ou chaque détecteur magnétique (71, 72) est disposé sur le deuxième support (41 ; 141) dans un interstice formé entre deux groupes de K éléments magnétiques.

4. Codeur (10 ; 110) selon l'une quelconque des revendications précédentes, dans lequel, les M groupes de K éléments magnétiques définissent les mêmes pas variables Pi.

5. Codeur (10 ; 110 selon l'une quelconque des revendications précédentes, dans lequel, chaque pas variable Pi est défini selon la relation suivante :

$$\mathrm{Pi} = k_i \frac{\mathrm{L}}{\mathrm{N}}$$

où

L est ladite étendue prédéterminée ;
$k_i$ est un nombre naturel choisi différent pour chaque pas variable.

6. Codeur (10 ; 110) selon l'une quelconque des revendications précédentes, dans lequel, au moins un élément magnétique de l'un des M groupes de K éléments magnétiques est disposé entre deux éléments magnétiques d'un autre groupe de K éléments magnétiques.

7. Codeur (10 ; 110) selon l'une quelconque des revendications précédentes, dans lequel, le deuxième corps (22 ; 122) est le corps fixe.

8. Codeur (10 ; 110) selon l'une quelconque des revendications précédentes, dans lequel la direction de codage (C1, C2) correspond à une translation le long de l'axe de codeur (X) ou à une rotation autour de l'axe de codeur (X).

9. Codeur (10 ; 110) selon l'une quelconque des revendications précédentes, dans lequel le corps mobile est mobile par rapport au corps fixe selon en outre une direction de codage supplémentaire (C1, C2) perpendiculaire à ladite direction de codage (C1, C2).

10. Codeur (10 ; 110) selon la revendication 9, dans lequel le premier corps (21 ; 121) et le deuxième corps (22 ; 122) comprennent une pluralité d'éléments magnétiques supplémentaires disposés selon la direction de codage supplémentaire (C1, C2) sur les deux corps au moins partialement en regard.

FIG.1

EP 4 530 580 A1

EP 4 530 580 A1

FIG.2

EP 4 530 580 A1

FIG.3

EP 4 530 580 A1

FIG.4

FIG.5

_FIG.6_

FIG.7

EP 4 530 580 A1

D4

D3

FIG.8

P12

72

72

62

52

Pin-pole

Pex-pole

72

72

EP 4 530 580 A1

FIG.9

FIG.10

EP 4 530 580 A1

FIG.11

EP 4 530 580 A1

FIG.12

Europäisches Patentamt

European Patent Office

Office européen des brevets

# RAPPORT DE RECHERCHE EUROPEENNE

Numéro de la demande

EP 24 20 2773

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 3 057 079 A1 (VALEO COMFORT & DRIVING ASSISTANCE) 6 avril 2018 (2018-04-06) | 1,2,4,5, 7,8 | INV. G01D5/14 |
| Y | * abrégé; figures * <br> * page 6 * <br> * pages 17-18; figure 6 * <br> ----- | 3,9,10 | G01D5/245 G01D7/00 G05G1/10 G05G5/03 |
| X | FR 2 908 903 A1 (VALEO SYSTEMES THERMIQUES) 23 mai 2008 (2008-05-23) | 1,2,4-8 | G05G5/06 G06F3/01 |
| Y | * abrégé; figures * <br> * pages 12-13; figure 9 * <br> ----- | 3,9,10 | G06F3/0362 H01H19/11 H01H3/50 |
| Y | FR 3 062 935 A1 (VALEO COMFORT & DRIVING ASSISTANCE) 17 août 2018 (2018-08-17) | 3 | |
| A | * page 2, lignes 21-24; figure 9 * <br> ----- | 1,2,4-10 | |
| Y | US 2023/154295 A1 (ALZINGRE ET AL) 18 mai 2023 (2023-05-18) | 9,10 | |
| A | * le document en entier * <br> * alinéas [0054] - [0058]; figures 12A,12B * <br> ----- | 1-8 | |

**DOMAINES TECHNIQUES RECHERCHES (IPC)**

G01D
G06F
G05G
H01H
G01G
H03K

Le présent rapport a été établi pour toutes les revendications

| Lieu de la recherche | Date d'achèvement de la recherche | Examinateur |
|---|---|---|
| Munich | 3 février 2025 | Barthélemy, Matthieu |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 2773

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

03-02-2025

| Document brevet cité au rapport de recherche | Date de publication | Membre(s) de la famille de brevet(s) | Date de publication |
|---|---|---|---|
| FR 3057079 A1 | 06-04-2018 | AUCUN | |
| FR 2908903 A1 | 23-05-2008 | AUCUN | |
| FR 3062935 A1 | 17-08-2018 | AUCUN | |
| US 2023154295 A1 | 18-05-2023 | CN 115698896 A | 03-02-2023 |
| | | EP 4127859 A1 | 08-02-2023 |
| | | FR 3108741 A1 | 01-10-2021 |
| | | JP 2023519604 A | 11-05-2023 |
| | | KR 20220161359 A | 06-12-2022 |
| | | US 2023154295 A1 | 18-05-2023 |
| | | WO 2021198591 A1 | 07-10-2021 |

EPO FORM P0460

Pour tout renseignement concernant cette annexe : voir Journal Officiel de l'Office européen des brevets, No.12/82

## RÉFÉRENCES CITÉES DANS LA DESCRIPTION

**Documents brevets cités dans la description**

- FR 2937129
- FR 2954491
- FR 2370350